# EUROPÄISCHE PATENTSCHRIFT

(11) **EP 4 017 921 B1**
(45) Veröffentlichungstag und Bekanntmachung des Hinweises auf die Patenterteilung: **22.02.2023**
(21) Anmeldenummer: 19755903.2
(22) Anmeldetag: 19.08.2019
(51) Int. Cl.: C08L 83/04, C08G 65/332, C09D 183/04

(54) **SILICONZUSAMMENSETZUNG UND VERFAHREN ZUR HERSTELLUNG VON VERBUNDFORMTEILEN**
SILICONE COMPOSITION AND METHOD FOR MANUFACTURING COMPOSITE MOLDINGS
COMPOSITION DE SILICONE ET PROCÉDÉ DE FABRICATION DE MOULAGES COMPOSITES

(43) Veröffentlichungstag der Anmeldung: 29.06.2022
(73) Patentinhaber: Wacker Chemie AG, 81737 München (DE)
(72) Erfinder: KUHN, Arvid, 84489 Burghausen (DE); SCHREIBER, Inge, 84387 Julbach (DE); STEPP, Michael, 5123 Überackern (AT)
(74) Vertreter: Mieskes, Klaus Theoderich
(86) Internationale Anmeldenummer: PCT/EP2019/072101
(87) Internationale Veröffentlichungsnummer: WO 2021/032275

(56) Entgegenhaltungen:
- EP-A1- 0 961 811
- US-A- 5 580 921

## Beschreibung

Die vorliegende Erfindung betrifft eine Siliconzusammensetzung und ein Verfahren zur Herstellung von Verbundmaterial wie beispielsweise 2K Formteilen aus weichen additionsvernetzenden Siliconelastomeren in Kombination mit harten Thermoplasten wie beispielsweise Polyamid, Polycarbonat und Polybutylenterephthalat.

Verbundartikel aus verschiedenen Materialien sind wichtige Werkstoffe. Die Anforderung an diese Materialien ist ein fester und unter den entsprechenden Einsatzbedingungen dauerhafter Verbund zwischen den einzelnen Substratmaterialien. Hat die Siliconzusammensetzung bei der Verarbeitung Kontakt mit einer Form, wie z.B. bei der Verarbeitung von Thermoplast und Silicon im Zweikomponenten (2K) Spritzguss, so ist zudem eine Anhaftung des Silicons oder des Verbundes an der Form unerwünscht.

Als Substratmaterialien kommen beispielsweise Metalle, Gläser, Keramiken, organische Polymere oder biologische Materialien sowie Silicone bzw. vernetzbare Siliconmassen in Frage. Bei Siliconen ist allerdings aufgrund ihrer abhäsiven Natur ein dauerhafter Verbund mit anderen Substraten schwierig zu erreichen.

Die EP0961811B1 beschreibt lagerstabile additionsvernetzende Siliconzusammensetzungen und deren Verwendung als hydrophile Abformmassen am menschlichen Körper, beispielsweise für Dentalabformmassen. In dieser Anwendung ist die abhäsive Natur der Siliconmassen somit von Vorteil, da ja explizit eine schlechte und damit reversible Haftung auf Oberflächen wie beispielsweise Zahnschmelz, und zahnmedizinischen Kunststoffen, Metallen und Keramiken notwendig ist.

Aus der Literatur sind zahlreiche Technologien bekannt, um eine feste und dauerhafte Verbindung zwischen Siliconen und anderen Substratmaterialien herzustellen.

Grundsätzlich besteht die Möglichkeit einer Modifizierung der chemischen und physikalischen Beschaffenheit des Substratmaterials, um die Haftfestigkeit zwischen dem Silicon und dem Substratmaterial zu verbessern.

Ein beispielhaftes Verfahren stellt die Vorbehandlung der Oberfläche der Substratmaterialien mit UV-Bestrahlung, Beflammung, Corona- oder Plasmabehandlung dar. Bei derartigen Vorbehandlungsschritten wird die Oberfläche bzw. oberflächennahe Schicht der Substratmaterialien aktiviert, d.h. es werden funktionelle, vorwiegend polare Gruppen geschaffen, welche das Zustandekommen einer Verbindung ermöglichen und auf diese Weise zur Realisierung eines dauerhaften Verbundmaterials beitragen.

Ein anderer Weg der Herstellung von dauerhaft festen Silicon-Verbundmaterialien stellt die Aufbringung von Grundierungen, sogenannten Primern, auf das Substratmaterial dar. Derartige Grundierungen enthalten jedoch neben haftvermittelnden Additiven oftmals auch Lösemittel, die nach der Aufbringung auf das Substratmaterial wieder entfernt werden müssen.

Nachteil all dieser Methoden ist, dass durch die Vorbehandlung der Substrate ein zusätzlicher Prozessschritt nötig wird. Dieser Nachteil kann umgangen werden, indem im Substratmaterial geeignete funktionelle Gruppen im Volumen bzw. an der Oberfläche des Silicons bzw. des Substratmaterials zur Verfügung gestellt werden, welche bei der Herstellung des Verbundartikels einen Beitrag zum Haftungsaufbau liefern.

Die eben beschriebene Vorgehensweise erfordert jedoch eine strukturelle Modifizierung mindestens eines der Substrate, wodurch die physikalischen und chemischen Eigenschaften negativ beeinflusst werden können. Außerdem ist eine chemische Modifizierung von Polymeren mit einem zum Teil erheblichen Aufwand verbunden.

Ein weiterer Weg, Haftung zwischen einem Silicon und einem polymeren Substrat zu erreichen, ist der Zusatz spezieller Additive und/oder spezieller Vernetzer, sogenannter Haftvermittler. Diese den unvernetzten Siliconzusammensetzungen beigemischten Additive bewirken während bzw. nach der Vulkanisation - gegebenenfalls erst nach Lagerung - einen Haftungsaufbau mit einem Substratmaterial.

Hierdurch wird nicht entscheidend in die chemische Natur der am Verbund beteiligten Materialien eingegriffen. Zudem ist in der Regel keine weitere Vorbehandlung der Substratmaterialien notwendig.

Beispielsweise beschreibt DE102007044789 selbsthaftende additionsvernetzende Siliconzusammensetzungen, welche sehr gute Haftung auf technischen insbesondere Bisphenol-A basierten Kunststoffen zeigen. Hierbei kommt als Haftvermittler eine Mischung aus zyklischen Organohydrogensiloxanen und einer Verbindung mit mindestens zwei Phenyl-Einheiten und einer Alkenyleinheit zum Einsatz.

Auch EP2603562B1 beschreibt selbsthaftende additionsvernetzende Siliconzusammensetzungen, welche als Haftvermittler eine Mischung aus cyclischem Organohydrogensiloxan und einer organischen Verbindung mit mindestens zwei aliphatisch ungesättigten Gruppen pro Molekül enthalten. Laut der Lehre der EP2603562B1 führt erst diese Kombination zu einer besonders guten Haftung insbesondere auf Bisphenol-A-haltigen Thermoplasten.

Nach dem Stand der Technik ist eine Vielzahl von selbsthaftenden vernetzbaren Siliconzusammensetzungen bekannt.

Die bekannten Lösungen zeigen jedoch, dass eine gute Haftung auf bestimmten Substraten stark vom eingesetzten Haftvermittler abhängt. Ein weiteres Problem ist die Tatsache, dass die Mehrheit der beschriebenen haftungsverbessernden Additive, welche den Siliconmassen zugesetzt werden, Phenyl- oder Alkoxysilylgruppen enthalten und diese bzw. deren Hydrolyseprodukte damit toxisch bzw. gesundheitsgefährdend sind. Dadurch ist deren Einsatz auf technische Materialien beschränkt. Für medizinische, kosmetische oder lebensmittelnahe Anwendungen sind diese Materialien ungeeignet.

Ein Gegenstand der vorliegenden Erfindung ist daher die Bereitstellung von Silikonzusammensetzungen, die in Verfahren zur Beschichtung von Substratoberflächen oder zur Herstellung von Verbundformteilen eingesetzt werden und eine spezifische gute Haftung zum Substrat zeigen, gleichzeitig aber keine störende Haftung zu der Verarbeitungsapparatur wie beispielsweise den Spritzgussformen aufbauen, damit die Formartikel leicht entformt werden können und dabei keine Beschädigung erlangen und somit eine hohe Prozesssicherheit erreicht wird.

Ein Gegenstand der Erfindung sind daher additionsvernetzende Siliconkautschukzusammensetzungen, enthaltend
(A) mindestens ein Organopolysiloxan mit mindestens zwei aliphatischen Doppelbindungen im Molekül,
(B) mindestens ein Organopolysiloxan mit mindestens drei Si-H Gruppen im Molekül, **dadurch gekennzeichnet, dass sein Si-H-Gehalt mindestens 0,45 Gew.% und maximal 1,3 Gew.% beträgt**,
(C) mindestens einen Hydrosilylierungskatalysator,
(D) mindestens einen Haftvermittler der allgemeinen Formel (I)

   [H₂C=CH-(A¹)_{z}-(A²)ₘ-X]ₙB (I)

   in der
   - A¹: einen zweiwertigen C₁-C₁₈-Kohlenwasserstoffrest, der substituiert oder nicht substituiert ist mit Halogenatomen,
   - A²: einen zweiwertigen C₁-C₂₄-Kohlenwasserstoffrest, der durch nicht benachbarte Sauerstoffatome oder Stickstoffatome oder Gruppen der Formeln -NR-, -CO- oder -CO-NR¹- unterbrochen oder nicht unterbrochen ist und zusätzlich noch substituiert oder nicht subsituiert ist mit Halogenatomen, mit der Maßgabe, dass pro Sauerstoff- oder Stickstoffatom mindestens 5 Kohlenstoffatome vorhanden sind,
   - X: eine zweiwertige Gruppe -O-, -CO- oder -COO-,
   - B: polare Reste, die Kohlenstoffatome und mindestens 2 nicht benachbarte Sauerstoffatome aufweisen, wobei die Sauerstoffatome als Ethersauerstoff oder in Hydroxylgruppen, C₁-C₄-Acyl- oder C₁-C₃-Trialkylsilylgruppen vorliegen, mit der Maßgabe, dass pro Sauerstoffatom höchstens 3 Kohlenstoffatome vorhanden sind,
   - m: die Werte 0 oder 1, bevorzugt den Wert 0,
   - **n**: **den Wert 2**,
   - **z**: **die Werte 0 oder 1**,
   - R und R¹: jeweils einen einwertigen C₁-C₁₀-Kohlenwasserstoffrest, der substituiert ist oder nicht substituiert ist mit Halogenatomen,
   bedeuten,
   mit der Maßgabe, dass die Reste [H₂C=CH-(A¹)_{z}-(A²)ₘ-X] gleich oder voneinander verschieden sind,
(E) **KEIN cyclisches** Organohydrogenpolysiloxan der allgemeinen Formel (III) enthält,

   (SiHR⁷O)_{g}(SiR⁸R⁹O)ₖ (III),

   in der
   - R⁷: Wasserstoff oder das gleiche wie R⁸, und
   - R⁸: und R⁹ unabhängig voneinander
   (a) einen monovalenten aliphatisch gesättigten Kohlenwasserstoffrest mit 1 bis 20 Kohlenstoffatomen, oder
   (b) einen halogensubstituierten oder nicht substituierten monovalenten Kohlenwasserstoffrest mit 6 bis 20 Kohlenstoffatomen, welcher mindestens einen aromatischen C₆-Ring enthält, oder
   (c) einen monovalenten cycloaliphatischen halogensubstituierten oder nicht substituierten Kohlenwasserstoffrest mit 3 bis 20 Kohlenstoffatomen, oder
   (d) einen halogensubstituierten, O- oder N-Atome enthaltenden oder nicht enthaltenden, gesättigten, monovalenten Kohlenwasserstoffrest mit 2 bis 20 Kohlenstoffatomen, oder
   (e) einen Si-Atome enthaltenden linearen, cyclischen oder verzweigten Rest mit oder ohne einem oder mehreren Si-gebundenen Wasserstoffatomen bedeuten,
   - g: eine Zahl größer oder gleich 1, und
   - k: Null oder eine positive Zahl, bevorzugt 0, 1, 2 und besonders bevorzugt 0, bedeuten,
mit der Maßgabe, dass die Summe aus g und k eine Zahl größer oder gleich 4 ist.

Um die Seitenzahl der Beschreibung der vorliegenden Erfindung nicht zu umfangreich zu gestalten, werden nur die bevorzugten Ausführungsformen der einzelnen Merkmale pro Komponente aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist - also jede Kombination sowohl innerhalb einer einzigen Komponente als auch zwischen unterschiedlichen Komponenten.

Der Bestandteil (A) ist dem Fachmann seit langem bekannt. Bevorzugt sind Organopolysiloxane mit mindestens zwei aliphatischen Doppelbindungen im Molekül. Es handelt sich vorzugsweise um Organopolysiloxan, das SiC-gebundene C₁-C₆-Alkylreste, insbesondere Methylreste und/oder Phenylreste aufweist und mindestens 2 C₁-C₆-Alkenylreste pro Molekül besitzt, die die aliphatischen Doppelbindungen enthalten. Die bevorzugten Alkenylreste sind Vinylreste und Allylreste. Vorzugsweise enthält ein Molekül nicht mehr als 10 Alkenylreste.

Vorzugsweise sind die Organopolysiloxane (A) linear. Die Viskosität von (A) richtet sich nach der gewünschten Viskosität der formulierten Siliconzusammensetzung bzw. dem mechanischen Profil der damit herstellbaren Formkörper und beträgt vorzugsweise 200 bis 200.000 mPa.s bei 20°C.

Die Mengen an (A) in der erfindungsgemäßen Siliconzusammensetzung liegen bei Abwesenheit von optionalen Komponenten typischerweise bei 50 bis 80 Gew.%. Bevorzugt bei 60 bis 70 Gew.%. Bei Anwesenheit von optionalen Komponenten verringert sich die Menge an (A) entsprechend.

Der Bestandteil (B) ist dem Fachmann ebenfalls seit langem bekannt. Es handelt sich um Organopolysiloxane mit mindestens drei Si-H Gruppen im Molekül, vorzugsweise um Organopolysiloxane, die neben Si-H Gruppen SiC-gebundene C₁-C₆-Alkylreste, insbesondere Methylreste und/oder Phenylreste aufweisen. Vorzugsweise sind die Organopolysiloxane (B) linear.

Wichtig bei (B) ist, dass ihr Si-H-Gehalt mindestens 0,45 Gew.% und maximal 1,3 Gew.% beträgt. Bevorzugt mindestens 0,7 Gew.% und bevorzugt maximal 1,2 Gew.%.

Die Viskosität der Organopolysiloxane (B) beträgt bei 20°C vorzugsweise 5 bis 50.000 mPa.s, insbesondere 10 bis 5.000 mPa.s, besonders bevorzugt 15 - 100 mPa.s.
Bevorzugte Ausführungen der Organopolysiloxane (B) sind beispielsweise
Copolymere enthaltend H(CH₃)SiO_{2/2}- und (CH₃)₂SiO_{2/2}-Einheiten aufweisend (CH₃)₃SiO_{1/2}-Endgruppen,
Copolymere enthaltend H(CH₃)SiO_{2/2}- und (CH₃)₂SiO_{2/2}-Einheiten aufweisend H(CH₃)₂SiO_{1/2}-Endgruppen,
Copolymere enthaltend (Ph)₂SiO_{2/2}- und H(CH₃)SiO_{2/2}-Einheiten aufweisend (CH₃)₃SiO_{1/2}-Endgruppen,
Copolymere enthaltend (Ph)₂SiO_{2/2}-, (CH₃)₂SiO_{2/2}- und H(CH₃)Si_{2/2}-Einheiten aufweisend (CH₃)₃SiO_{1/2}-Endgruppen,
Copolymere enthaltend (Ph)SiO_{3/2}-, (CH₃)₂SiO_{2/2}- und H(CH₃)Si_{2/2}-Einheiten aufweisend (CH₃)₃SiO_{1/2}-Endgruppen,
Copolymere enthaltend (Ph) (CH₃)SiO_{2/2}-, (CH₃)₂SiO_{2/2}- und
H(CH₃)Si_{2/2}-Einheiten aufweisend (CH₃)₃SiO_{1/2}-Endgruppen, Copolymere enthaltend (Ph) (CH₃)SiO_{2/2}-, (CH₃)₂SiO_{2/2}- und
H(CH₃)Si_{2/2}-Einheiten aufweisend H(CH₃)₂SiO_{1/2}-Endgruppen, Copolymere enthaltend (Ph) (CH₃)SiO_{2/2}- und H(CH₃)Si_{2/2}-Einheiten aufweisend (CH₃)₃SiO_{1/2}-Endgruppen,
Copolymere enthaltend -Si(CH₃)₂-C₆H₄-Si(CH₃)₂O_{2/2}-, (CH₃)₂SiO_{2/2}- und H(CH₃)HSiO_{1/2}-Einheiten, und
Copolymere enthaltend -Si(CH₃)₂-C₆H₄-Si(CH₃)₂O_{2/2}- und (CH₃)HSiO_{2/2}-Einheiten.
Besonders bevorzugte Ausführungen der Organopolysiloxane (B) sind beispielsweise
Copolymere enthaltend H(CH₃)SiO_{2/2}- und (CH₃)₂SiO_{2/2}-Einheiten aufweisend (CH₃)₃SiO_{1/2}-Endgruppen, und
Copolymere enthaltend (Ph)SiO_{3/2}-, (CH₃)₂SiO_{2/2}- und H(CH₃)Si_{2/2}-Einheiten aufweisend (CH₃)₃SiO_{1/2}-Endgruppen.

Die Mengen an (B) in der erfindungsgemäßen Siliconzusammensetzung liegen typischerweise bei 0,1 bis 10 Gew.%. Bevorzugt mindestens 0,3 Gew.% und besonders bevorzugt mindestens 0,5 Gew.%. Bevorzugt höchstens 5 Gew.% und besonders bevorzugt höchstens 3 Gew.%.

Bevorzugt liegt das Verhältnis von SiH aus Komponente (B) zur Gesamtzahl an Si-Vinyl-gebundenen Gruppen in der additionsvernetzenden Siliconkautschukzusammensetzung zwischen 0,5 und 5 und besonders bevorzugt zwischen 0,6 und 1,8.

Bestandteil (C) sind dem Fachmann ebenfalls seit langem bekannt. Es handelt sich um Edelmetallkatalysatoren, insbesondere Metalle und deren Verbindungen aus der Gruppe Platin, Rhodium, Palladium, Ruthenium und Iridium, insbesondere Platin und/oder dessen Verbindungen. Es können hier alle Katalysatoren eingesetzt werden, die auch bisher zur Addition von Si-H-Gruppen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆.6H₂O, Na₂PtCl₄.4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆.6H₂O und Cyclohexanon, Platin-Siloxan Komplexe wie Platin-Vinylsiloxankomplexe, insbesondere Platin-Divinyltetramethyldisiloxankomplexe mit oder ohne Gehalt an nachweisbarem anorganisch gebundenem Halogen, Bis- (gamma-picolin)-platindichlorid, Trimethylendipyridinplatindichlorid, Dicyclopentadienplatindichlorid, Dimethylsulfoxydiethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe. Auch UV-aktivierbare Hydrosilylierungskatalysatoren können eingesetzt werden.

Der Hydrosilylierungskatalysator (C) kann in jeder beliebigen Form eingesetzt werden, beispielsweise auch in Form von Hydrosilylierungskatalysator enthaltenden Mikrokapseln, oder Polyorganosiloxanpartikeln. Der Gehalt an Hydrosilylierungskatalysatoren (C) wird vorzugsweise so gewählt, dass die erfindungsgemäße additionsvernetzbare Zusammensetzung einen Pt-Gehalt von 0,1 bis 200 Gew.-ppm, insbesondere von 0,5 bis 40 Gew.-ppm besitzt.

Der Bestandteil (D) ist ein Haftvermittler der allgemeinen Formel (I)

[H₂C=CH-(A¹)_{z}-(A²)ₘ-X]ₙB (I)

in der
- A¹: einen zweiwertigen C₁-C₁₈-Kohlenwasserstoffrest, der substituiert oder nicht substituiert ist mit Halogenatomen,
- A²: einen zweiwertigen C₁-C₂₄-Kohlenwasserstoffrest, der durch nicht benachbarte Sauerstoffatome oder Stickstoffatome oder Gruppen der Formeln -NR-, -CO- oder -CO-NR¹- unterbrochen ist oder nicht unterbrochen ist und zusätzlich noch substituiert oder nicht substituiert ist mit Halogenatomen, mit der Maßgabe, dass pro Sauerstoff- oder Stickstoffatom mindestens 5 Kohlenstoffatome vorhanden sind,

- X: eine zweiwertige Gruppe -O-, -CO- oder -COO-,
- B: polare Reste, die Kohlenstoffatome und mindestens 2 nicht benachbarte Sauerstoffatome aufweisen, wobei die Sauerstoffatome als Ethersauerstoff oder in Hydroxylgruppen, Cₗ-C₄-Acyl- oder C₁-C₃-Trialkylsilylgruppen vorliegen, mit der Maßgabe, dass pro Sauerstoffatom höchstens 3 Kohlenstoffatome vorhanden sind,
- m: die Werte 0 oder 1,
- **n**: **den Wert 2**,
- z: die Werte 0 oder 1,
- R und R¹: jeweils einen einwertigen C₁-C₁₀-Kohlenwasserstoffrest, der substituiert oder nicht substituiert ist mit Halogenatomen,
bedeuten,
mit der Maßgabe, dass die Reste [H₂C=CH-(A¹)_{z}-(A²)ₘ-X] gleich oder voneinander verschieden sind.

Die Haftvermittler (D) sind teilweise kommerziell erhältlich und werden nach allgemein üblichen Methoden der organischen Synthesechemie hergestellt.

Der zweiwertige C₁-C₁₈-Kohlenwasserstoffrest A¹ kann gesättigt, aliphatisch ungesättigt, aromatisch, linear oder verzweigt sein. Vorzugsweise weist A¹ 3 bis 13 Kohlenstoffatome auf.

Bevorzugte Haftvermittler (D) tragen in der Formel (I) für m den Wert 0, so das A² nicht vorhanden ist.

Die zwei im Molekül (I) vorhandenen Gruppen X können folgende Gruppen sein: zweimal -O-; einmal -O- und einmal -COO-; einmal -COO- und einmal -CO-; zweimal -CO-; zweimal -COO-. Somit können sich chemisch gesehen aus den beiden Gruppen X zusammen mit der Gruppe B z.B. ein Diether, ein Ether und ein Ester oder ein Diester bilden. Bevorzugt sind Diester.

Vorzugsweise weist (D) mindestens vier, insbesondere mindestens sechs Sauerstoffatome auf.

Bevorzugte Haftvermittler (D) sind:
Di-Ester der folgenden Glycole, wie z.B. Oligo- oder Polyalkylenglykole mit den folgenden organischen Säuren.

Glycole:
- Oligo- oder Polyethylenglycol
- Oligo- oder Polypropylenglycol
- Copolymere aus Ethylenglycol/Propylenglycol
- Copolymere aus Ethylenglycol / iso-propylenglycol
- Oligo- oder Poly-iso-propylenglycol

Besonders bevorzugt sind die Diester von Oligo- oder Polyethylenglycolen. Dabei können die Oligo- oder Polyethylenglycole im Wesentlichen aus einer Reinsubstanz bestehen, also eine definierte Anzahl an Wiederholungseinheiten aufweisen, oder die Oligo- oder Polyethylenglycole können eine Molekulargewichtsverteilung aufweisen, also eine Mischung aus Substanzen unterschiedlicher Molekulargewichtsverteilung, wie sie mit Gelpermeationschromatographie nachweisbar ist.

Organische Säuren, die mindestens endständig eine Doppelbindung tragen, wie:
- Acrylsäure
- 3-Butensäure
- 4-Pentensäure
- 5-Hexensäure
- 6-Heptensäure
- 7-Octensäure
- 8-Nonensäure
- 9-Decensäure
- 10-Undecensäure
- 11-Dodecensäure
- 12-Tridecensäure
- 13-Tetradecensäure
- 14-Pentadecensäure
- 15-Hexadecensäure
und so weiter.

Auch mehrfach ungesättigte und / oder verzweigte Carbonsäuren sind möglich. Bevorzugt sind aber solche, bei denen mindestens eine Doppelbindung endständig steht.

Weiterhin bevorzugte Haftvermittler sind Mono-Ester der folgenden Glycole, wie z.B. Oligo- oder Polyalkylenglykole, die einseitig mit aliphatisch ungesättigten Kohlenwasserstoffresten C₂
- C₁₆ wie Vinyl-, Allyl- oder längeren Resten verethert sind:
   - Oligo- oder Polyethylenglycolmonoallylether
   - Oligo- oder Polyethylenglycolmonovinylether
   - Oligo- oder Polypropylenglycolmonoallylether
   - Oligo- oder Polypropylenglycolmonovinylether
   - Copolymere aus Ethylenglycol/Propylenglycolmonoallylether
   - Copolymere aus Ethylenglycol/Propylenglycolmonovinylether
   - Copolymere aus Ethylenglycol/Isopropylenglycolmonoallylether
   - Copolymere aus Ethylenglycol/Isopropylenglycolmonovinylether
   - Oligo- oder Poly-iso-propylenglycolmonoallylether
   - Oligo- oder Poly-iso-propylenglycolmonovinylether
wobei die Monoester mit den oben genannten Säuren gebildet werden.

Besonders bevorzugte Haftvermittler (D) sind:
- Di-Ester aus Oligoethylenglycol mit endständig ungesättigten C₆ bis C₁₆ Carbonsäuren, insbesondere bevorzugt mit 10-Undencensäure. Das Oligoethylenglycol hat dabei zwischen 2 und 40 Ethylenglycoleinheiten -[CH₂-CH₂-O]- , bevorzugt 3 bis 20 Ethylenglycoleinheiten -[CH₂-CH₂-O]-, insbesondere bevorzugt 4 - 10 Ethylenglycoleinheiten -[CH₂-CH₂-O]-.

Die Siliconzusammensetzung enthalten mindestens 0,05 Gew.% (D), bevorzugt mindestens 0,1 Gew.% (D). Sie enthalten weiterhin höchstens 10 Gew.% (D), bevorzugt höchstens 4 Gew.% (D).

Die Komponente (E) ist NICHT enthalten, da die gewünschte gute Haftung zum Substrat überraschenderweise ohne diese Komponente (E) erreicht wird, bei gleichzeitig geringer, also reversibler Haftung zu den Verarbeitungsapparaturen wie bspw. den Spritzgussformen.

Die erfindungsgemäßen additionsvernetzbaren Siliconzusammensetzungen können zudem als weiteren Bestandteil mindestens einen Füllstoff (F) enthalten. Geeignete Füllstoffe sind dem Fachmann bekannt. Nicht verstärkende Füllstoffe (F) mit einer BET-Oberfläche von bis zu 50 m²/g, sind beispielsweise Quarz, Diatomeenerde, Talk, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver. Verstärkende Füllstoffe, also Füllstoffe mit einer BET-Oberfläche von mindestens 50 m²/g, insbesondere 100 bis 400 m²/g sind beispielsweise pyrogen hergestellte Kieselsäure, gefällte Kieselsäure, Aluminiumhydroxid, Ruß, wie Furnace- und Acetylenruß und Silicium-Aluminium-Mischoxide großer BET-Oberfläche. Die genannten Füllstoffe (F) können hydrophobiert sein, beispielsweise durch die Behandlung mit Organosilanen, Organosilazanen bzw. -siloxanen oder durch Verätherung von Hydroxylgruppen zu Alkoxygruppen. Es kann eine Art von Füllstoff (F), es kann auch ein Gemisch von mindestens zwei Füllstoffen (F) eingesetzt werden. Vorzugsweise enthalten die erfindungsgemäßen Siliconzusammensetzungen mindestens 3 Gew.%, besonders bevorzugt mindestens 5 Gew.%, insbesondere mindestens 10 Gew.% und höchstens 50 Gew.% Füllstoffanteil (F).

Die erfindungsgemäßen Siliconzusammensetzungen können wahlweise als weiteren Bestandteil (G) mögliche Zusätze zu einem Anteil von 0 bis 70 Gew.%, vorzugsweise 0,0001 bis 40 Gew.%, enthalten. Diese Zusätze sind dem Fachmann bekannt und können beispielsweise harzartige Polyorganosiloxane, die von den Polyorganosiloxanen (A) und (B) und natürlich auch (H) verschieden sind, Dispergierhilfsmittel, Lösungsmittel, Haftvermittler, Pigmente, Farbstoffe, Weichmacher, organische Polymere, Hitzestabilisatoren und Inhibitoren sein. Des Weiteren können als Bestandteil thixotropierende Bestandteile, wie hochdisperse Kieselsäure oder andere handelsübliche Thixotropieadditive enthalten sein.

Enthalten sein können zudem weitere Zusätze, die der gezielten Einstellung der Verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.

Die erfindungsgemäßen Siliconzusammensetzungen können optional als weiteren Bestandteil (H) Organopolysiloxane mit mindestens zwei SiH Gruppen im Molekül enthalten, die von der Komponente (B) verschieden sind. Vorzugsweise sind dies im Wesentlichen lineare Organopolysiloxane, die neben Si-H Gruppen SiC-gebundene C₁-C₆ Alkylreste, insbesondere Methylreste und/oder Phenylreste aufweisen. Die Organopolysiloxane (H) weisen bevorzugt endständig SiH Gruppen auf. Wie bei dem Bestandteil (A) richtet sich die Viskosität der Organopolysiloxane (H) nach der gewünschten Viskosität der formulierten Siliconzusammensetzung bzw. dem mechanischen Profil der daraus herstellbaren Vulkanisate und beträgt 10 - 200.000 mPa.s, vorzugsweise 15 - 10.000 m.Pas bei 20°C.

Beispiele für Organopolysiloxane (H) sind Dimethylsiloxy-terminierte Polydimethylsiloxane und Dimethylsiloxy-terminierte Copolymere aus Dimethylsiloxy- und Methyl-Phenylsiloxy-Einheiten.

Die Mengen an Bestandteil (H) in der erfindungsgemäßen Siliconzusammensetzung liegen typischerweise bei 0 - 50 Gew.%, bevorzugt bei 0 - 25 Gew.%.

Insgesamt werden die Mengen aller Bestandteile immer so ausgewählt, dass sie sich in den erfindungsgemäßen Siliconzusammensetzungen stets auf 100 Gew.% summieren.

Ein weiterer Gegenstand der vorliegenden Erfindung ist ein Verfahren zur Herstellung der erfindungsgemäßen additionsvernetzbaren Siliconzusammensetzung. Die Herstellung oder Compoundierung der erfindungsgemäßen Siliconzusammensetzung erfolgt bevorzugt durch Mischen der Komponenten (A) bis (D) und mit oder ohne (F) und/oder (G) und/oder (H). Die erfindungsgemäße Zusammensetzung kann als 1-, 2- oder Mehr-Komponentenzusammensetzung hergestellt werden. Die Vernetzung erfolgt in Abhängigkeit des Katalysators durch Erwärmen oder Bestrahlen mit einer geeigneten Lichtquelle.

Ein weiterer Gegenstand der vorliegenden Erfindung ist ein Verfahren zur Beschichtung von Substratoberflächen sowie zur Herstellung von Verbundformteilen, wobei man
a) die Substratoberflächen mit einer Siliconkautschukzusammensetzung beschichtet
   oder/und die Substrate und/oder Substratkombinationen zusammenfügt und die Siliconkautschukzusammensetzung in die Zwischenräume einbringt,
b) danach die Siliconkautschukzusammensetzung aushärtet,
c) danach ein Entformungsvorgang folgt,
   **dadurch gekennzeichnet, dass die Silikonkautschukzusammensetzung**
   eine Additionsvernetzende Siliconkautschukzusammensetzung ist, enthaltend
      (A) mindestens ein Organopolysiloxan mit mindestens zwei aliphatischen Doppelbindungen im Molekül,
      (B) mindestens ein Organopolysiloxan mit mindestens drei Si-H Gruppen im Molekül, **dadurch gekennzeichnet, dass sein Si-H-Gehalt mindestens 0,45 Gew.% und maximal 1,3 Gew.% beträgt,**
      (C) mindestens einen Hydrosilylierungskatalysator,
      (D) mindestens einen Haftvermittler der allgemeinen Formel (I)

         [H₂C=CH-(A¹)_{z}-(A²)ₘ-X]ₙB (I)

         in der
         - A¹: einen zweiwertigen C₁-C₁₈-Kohlenwasserstoffrest, der substituiert oder nicht substituiert ist mit Halogenatomen,
         - A²: einen zweiwertigen C₁-C₂₄-Kohlenwasserstoffrest, der durch nicht benachbarte Sauerstoffatome oder Stickstoffatome oder Gruppen der Formeln -NR-, -CO- oder -CO-NR¹- unterbrochen ist oder nicht unterbrochen ist und zusätzlich noch substituiert oder nicht substituiert ist mit Halogenatomen, mit der Maßgabe, dass pro Sauerstoff- oder Stickstoffatom mindestens 5 Kohlenstoffatome vorhanden sind,
         - X: eine zweiwertige Gruppe -O-, -CO- oder -COO-,
         - B: polare Reste, die Kohlenstoffatome und mindestens 2 nicht benachbarte Sauerstoffatome aufweisen, wobei die Sauerstoffatome als Ethersauerstoff oder in Hydroxylgruppen, Cₗ-C₄-Acyl- oder C₁-C₃-Trialkylsilylgruppen vorliegen, mit der Maßgabe, dass pro Sauerstoffatom höchstens 3 Kohlenstoffatome vorhanden sind,
         - m: die Werte 0 oder 1 **(bevorzugt den Wert 0)**
         - **n**: **den Wert 2**,
         - z: die Werte 0 oder 1,
         - R und R¹: jeweils einen einwertigen C₁-C₁₀-Kohlenwasserstoffrest, der substituiert oder nicht substituiert ist mit Halogenatomen,
         bedeuten,
         mit der Maßgabe, dass die Reste [H₂C=CH-(A¹)_{z}-(A²)ₘ-X] gleich oder voneinander verschieden sind,
      (E) **KEIN cyclisches** Organohydrogenpolysiloxan der allgemeinen Formel (III),

         (SiHR⁷O)_{g}(SiR⁸R⁹O)ₖ (III),

         in der
         - R⁷: Wasserstoff oder das gleiche wie R⁸, und
         - R⁸ und R⁹: unabhängig voneinander
         (a) einen monovalenten aliphatisch gesättigten Kohlenwasserstoffrest mit 1 bis 20 Kohlenstoffatomen, oder
         (b) einen halogensubstituierten oder nicht substituierten monovalenten Kohlenwasserstoffrest mit 6 bis 20 Kohlenstoffatomen, welcher mindestens einen aromatischen C₆-Ring enthält, oder
         (c) einen monovalenten cycloaliphatischen halogensubstituierten oder nicht substituierten Kohlenwasserstoffrest mit 3 bis 20 Kohlenstoffatomen, oder
         (d) einen halogensubstituierten, O- oder N-Atome enthaltenden oder nicht enthaltenden, gesättigten, monovalenten Kohlenwasserstoffrest mit 2 bis 20 Kohlenstoffatomen, oder
         (e) einen Si-Atome enthaltenden linearen, cyclischen oder verzweigten Rest mit oder ohne einem oder mehreren Si-gebundenen Wasserstoffatomen bedeuten,
         - g: eine Zahl größer oder gleich 1, und
         - k: Null oder eine positive Zahl, bevorzugt 0, 1, 2 und besonders bevorzugt 0, bedeuten,
      mit der Maßgabe, dass die Summe aus g und k eine Zahl größer oder gleich 4 ist.

Die Substrate sind Thermoplaste, bevorzugt Polyamid, Polycarbonat und Polybutylenterephthalat, besonders bevorzugt Polycarbonat.

Ein weiterer Gegenstand der vorliegenden Erfindung sind beschichte Substrate und Verbundformteile erhältlich durch das erfindungsgemäße Verfahren.

Es hat sich überraschend gezeigt, dass nur die Kombination aus (B) mit diesem ausgewählten Si-H-Gehalt in Kombination mit den speziellen Haftvermittlern (D) zu einer synergistischen Wirkung führt, mit einerseits sehr guter Haftung zu Substraten aus harten Thermoplasten wie beispielsweise Polyamid, Polycarbonat und Polybutylenterephthalat und zum anderen einer sehr schlechten Haftung zur Spritzgussform aus beispielsweise Stahl. Unerwartet und entgegen der Lehre aus EP2190927B1 ist, dass die zusätzliche Komponente (E) dafür NICHT benötigt wird. Die erfindungsgemäßen Zusammensetzungen ermöglichen im Verfahren zur Beschichtung von Substratoberflächen sowie zur Herstellung von Verbundformteilen, einen sehr zuverlässig arbeitenden Entformungsvorgang, wodurch weniger Störungen auftreten und somit insgesamt eine hohe Prozesssicherheit gegeben ist. Dies führt zu einer verbesserten Wirtschaftlichkeit einer Produktionsanlage.

### Beispiele:

Die nachfolgenden Beispiele beschreiben die prinzipielle Ausführbarkeit der vorliegenden Erfindung, ohne jedoch diese auf die darin offenbarten Inhalte zu beschränken.

Alle Prozentangaben beziehen sich auf das Gewicht. Falls nicht anders angegeben, werden alle Manipulationen bei Raumtemperatur (ca. 20°C) und unter Normaldruck (ca. 1,013 bar) ausgeführt. Bei den Apparaten handelt es sich um handelsübliche Laborgeräte wie sie von zahlreichen Geräteherstellern käuflich angeboten werden.

### Substratmaterialien

Die Haftung der erfindungsgemäßen und nicht erfindungsgemäßen Siliconzusammensetzungen wurde auf folgenden Substraten getestet:
- Polycarbonat: Makrolon^{®} 2405 (Bayer MaterialScience AG)
- Polybutylenterephthalat (PBT): Pocan^{®} B 1305 (Lanxess)
- V2A-Stahl (Industriequalität)

Vor der Herstellung der Probekörper für die Trennkraftmessung wurden die Substratmaterialien für das Pressvulkanisationsverfahren bzw. die Thermoplastgranulate für das Spritzgießverfahren entsprechend den Herstellerangaben in geeigneter Weise getrocknet. Für das Pressvulkanisationsverfahren wurden die Probekörper zusätzlich vorher entfettet.

### Charakterisierung der Haftung

Die Herstellung der Probekörper für die Trennkraftmessung erfolgte einerseits unter Laborbedingungen im Pressvulkanisationsverfahren. Zusätzlich wurden weitere Probekörper im 2-Komponentenspritzgießverfahren unter realen Fertigungsbedingungen hergestellt.

Für die Herstellung über Pressvulkanisation wurde eine entsprechende Edelstahlform verwendet, in die ein vorzugsweise mittels Spritzgießen hergestelltes Substrat mit den Abmessungen 60x25x2mm eingelegt und anschließend jene Form mit der zu testenden additionsvernetzenden Siliconzusammensetzung gefüllt wurde. Die Vulkanisation erfolgte dabei über einen Zeitraum von 3 Minuten bei einer Temperatur von 120°C und einer Druckkraft von 30 to für das Substratmaterial Polycarbonat, wobei eine vollständige Vernetzung der Flüssigsiliconzusammensetzung erfolgte. Für das Substratmaterial V2A erfolgte die Vulkanisation bei 180°C über einen Zeitraum von 5 Minuten. Anschließend wurden alle Probekörper auf Raumtemperatur abgekühlt. Der auf diese Weise hergestellte Probekörper, bestehend aus Substrat und 2,5 mm dicker Flüssigsiliconelastomerschicht, wurde nach Entnahme aus der Form zunächst mindestens 16 Stunden bei Raumtemperatur gelagert. Daraufhin wurde der Probekörper in eine Zugprüfvorrichtung eingespannt und die maximale Trennkraft bestimmt, die notwendig ist, um den anhaftenden Siliconelastomerstreifen zu entfernen.

Die Herstellung eines Probekörpers über das 2-Komponentenspritzgießverfahren erfolgte unter Verwendung einer Spritzgießmaschine mit rotierendem Plattenwerkzeug nach dem Stand der Technik. Dabei wurde zunächst ein Thermoplastgrundkörper hergestellt, der über einen rotierenden Drehteller zum zweiten Spritzgießaggregat befördert wurde. Im nächsten Prozessschritt wurde auf den fertigen Thermoplastgrundkörper die Siliconzusammensetzung gespritzt und auf das Substrat aufvulkanisiert. Der Einspritzdruck für selbsthaftende additionsvernetzende Siliconzusammensetzungen liegt üblicherweise im Bereich zwischen 200 bis 2000 bar, kann aber in Sonderfällen diese Werte unter- oder überschreiten. Die Einspritztemperatur für selbsthaftende additionsvernetzende Siliconzusammensetzungen liegt üblicherweise im Bereich 15 bis 50°C, wobei diese Temperaturen in Einzelfällen ebenfalls unter- oder überschritten werden können.

Die im 2-Komponentenspritzgießverfahren hergestellten und zur Beurteilung der Haftfestigkeit der erfindungsgemäßen Siliconelastomere auf den Substraten herangezogenen Probekörper sind in DIN ISO 813 angegeben.

Vor der Haftungsprüfung wurden die über das 2-Komponentenspritzgießverfahren hergestellten Probekörper ebenfalls mindestens 16 Stunden bei Raumtemperatur gelagert. Die Haftungsprüfung sowie die Rissbildbeurteilung erfolgte auf die gleiche Weise wie mit den Probeprüfkörpern aus der Pressvulkanisation.

Die Quantifizierung der Haftung der Verbunde bestehend aus Siliconelastomer und Thermoplastgrundkörper erfolgte in Anlehnung an die Haftungsprüfung gemäß DIN ISO 813. Dabei wurde das sogenannte 90°-Schälverfahren so durchgeführt, dass Substrat und Siliconelastomerstreifen einen Winkel von 90° zueinander aufweisen und die Abzugsgeschwindigkeit vorzugsweise 50 mm/min beträgt. Die ermittelte Trennkraft (TK) wurde aus dem Quotienten der maximalen Kraft N und der Breite des Probekörpers in N/mm angegeben. Je Beispiel wurden 3-5 Laminate gemessen und die Trennkraft als Mittelwert bestimmt.

### Grundmasse 1

In einem handelsüblichen Laborkneter wurden 232 g eines vinyldimetylsiloxy-terminierten Polydimethylsiloxans mit einer Viskosität von 20.000 mPa.s (25 °C) vorgelegt, auf 150 °C aufgeheizt und mit 159 g einer hydrophoben pyrogenen Kieselsäure mit einer spezifischen Oberfläche von 300 m²/g (gemessen nach BET) und einem Kohlenstoffgehalt von 3,9 - 4,2 Gew.% versetzt.

Es entstand eine hochviskose Masse, die anschließend mit 130 g des oben genannten Polydimethylsiloxans verdünnt wurde. Durch Kneten unter Vakuum (10 mbar) bei 150 °C wurde die erhaltene Masse innerhalb einer Stunde von Wasser und überschüssigen Beladungsmittelresten, insbesondere flüchtigen Bestandteilen, befreit.

### Grundmasse 2

In einem handelsüblichen Laborkneter wurden 202 g eines vinyldimetylsiloxy-terminierten Polydimethylsiloxans mit einer Viskosität von 20.000 mPa.s (25 °C), 45 g Hexamethyldisilazan und 15 g Wasser vorgelegt und 150 g einer hydrophilen pyrogenen Kieselsäure mit einer spezifischen Oberfläche von 300 m²/g (gemessen nach BET) zudosiert. Es entstand eine hochviskose Masse, die durch Kneten unter Vakuum (10 mbar) bei 150 °C innerhalb von zwei Stunden von Wasser und überschüssigen Beladungsmittelresten, insbesondere flüchtigen Bestandteilen, befreit und mit 110 g des oben genannten vinyl-terminierten Polydimethylsiloxans verdünnt wurde.

### Grundmasse 3

In einem handelsüblichen Laborkneter wurden 235 g eines vinyldimetylsiloxy-terminierten Polydimethylsiloxans mit einer Viskosität von 20.000 mPa.s (25 °C) und 24 g eines OHterminierten Polydimethylsiloxans mit einer Viskosität von 40 mPa.s vorgelegt. Unter Aufheizen bis auf 150 °C wurden 143 g einer gefällten Kieselsäure mit einer spezifischen Oberfläche von 200 m²/g (gemessen nach BET) zudosiert. Es entstand eine hochviskose Masse, die anschließend mit 90 g des oben genannten vinyl-terminierten Polydimethylsiloxans verdünnt wurde. Durch Kneten unter Vakuum (10 mbar) bei 150 °C wurde die erhaltene Masse innerhalb einer Stunde von flüchtigen Bestandteilen befreit.

### A-Komponente 1

345,8 g Grundmasse 1 wurden mit 3,5 g eines dimethylvinylsiloxyendgestopperten Polydimethylsiloxans mit Methylvinylsiloxygruppen und einem Vinylgehalt von 2,5 mmol/g und einer Viskosität von 340 mPa.s und 0,7 g einer Katalysatorlösung mit einem Pt-Gehalt von 1 Gew.%, welche einen Platin-Divinyltetramethyldisiloxan-Komplex in Siliconpolymer enthält, vermischt.

### Vernetzer 1

Trimethylsiloxy-endgestoppertes Mischpolymerisat aus Dimethylsiloxy- und Methylhydrogensiloxy-Einheiten im Molverhältnis 0,4 : 1 , mit einer Viskosität von 35 mPa.s und einem SiH Gehalt von 1,1 Gew.%.

### Vernetzer 2

Trimethylsiloxy-endgestoppertes Mischpolymerisat aus Dimethylsiloxy- und Methylhydrogensiloxy-Einheiten im Molverhältnis 2 : 1, mit einer Viskosität von 115 mPa.s und einem SiH Gehalt von 0,5 Gew.%.

### Vernetzer 3

Trimethylsiloxy-endgestoppertes Mischpolymerisat aus Dimethylsiloxy-, Methylhydrogensiloxy- und Phenylsiloxy-Einheiten im Molverhältnis 0,33 : 1 : 0,18 , mit einer Viskosität von 80 mPa.s und einem SiH Gehalt von 0,9 Gew.%.

### Vernetzer 4

Trimethylsiloxy-endgestoppertes Mischpolymerisat aus Dimethylsiloxy-, Methylhydrogensiloxy- und Phenylsiloxy-Einheiten im Molverhältnis 0,36 : 1 : 0,12 , mit einer Viskosität von 18 mPa.s und einem SiH Gehalt von 0,9 Gew.%.

### Vernetzer 5

Trimethylsiloxy-endgestoppertes Mischpolymerisat aus Dimethylsiloxy- und Methylhydrogensiloxy-Einheiten im Molverhältnis 9 : 1 , mit einer Viskosität von 150 mPa.s und einem SiH Gehalt von 0,14 Gew.%.

### Vernetzer 6

Trimethylsiloxy-endgestoppertes Poly-Methylhydrogensiloxan, mit einer Viskosität von 25 mPa.s und einem SiH Gehalt von 1,6 Gew.%.

### Haftvermittler 1

Zu 85,0 g 10-Undecensäurechlorid (erhältlich von Merck) wurden innerhalb von 30 min bei 80 °C 42,5 g Polyethylenglycol 200 (erhältlich von Merck) unter Rühren zudosiert und nachgerührt, bis keine Gasentwicklung mehr erkennbar war. Nach Zugabe von 1,7 g Hexamethyldisilazan wurde 1 Stunde bei 80 °C im Vakuum (< 4 mbar) ausgeheizt. Nach Abkühlen wurde der Rückstand über Dicalite Filterhilfe filtriert. Es wurden 94 g einer klaren, gelb-organgefarbenen Flüssigkeit erhalten. Das ¹H-NMR Spektrum entsprach dem des Bis-10-undecensäureesters von Polyethylenglycol 200.

### Haftvermittler 2

204,9 g Polyethylenglycol 300 (erhältlich von Merck) wurden in einem Kolben bei 80 °C vorgelegt und 208,0 g Undecensäurechlorid (erhältlich von Merck) innerhalb von 45 min zudosiert. Nach vollständiger Zugabe wurde 30 min bei 80 °C nachgerührt. Dann wurden bei 80 °C 13,7 g Hexamethyldisilazan zugegeben und weitere 5 min gerührt. Die Reaktionsmischung wurde 1 Stunde lang bei 120 °C und 1 mbar ausgeheizt. Der Rückstand wurde auf Raumtemperatur abgekühlt und über Dicalite Filterhilfe filtriert. Es wurden 360,9 g einer klaren, gelben Flüssigkeit erhalten. Das ¹H-NMR Spektrum entsprach dem des Bis-10-undecensäureesters von Polyethylenglycol 300.

Die A- und B-Komponenten aus den Beispielen werden z.B. in einem Speedmixer (Fa. Hauschild) intensiv vermischt und die Mischung auf die Substrate in der Form aufgetragen.

Trennkraftwerte von > 10 N/mm zu Polycarbonat an Probekörpern, die wie oben beschrieben in einer Pressform hergestellt wurden, werden als gut angesehen.

Trennkraftwerte von < 2 N/mm zu V2A Stahl an Probekörpern, die wie oben beschrieben in einer Pressform hergestellt wurden, werden als ausreichend niedrig angesehen, dass die entsprechenden Formulierungen im industriellen Spritzgussverfahren keine störende Haftung zur Spritzgussform aufbauen.

### Beispiel 1 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 3 g des Vernetzers 3 und 1,5 g Haftvermittler 1 vermischt.

| Vulkanisat: | Shore A 42 | |
|---|---|---|
| Haftung auf Makrolon 2405 | 11,7 N/mm | mit Kohäsionsriss |
| Haftung auf V2A | 1,6 N/mm | mit Adhäsionsriss |

### Beispiel 2 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 3 g des Vernetzers 3 und 0,75 g Haftvermittler 2 vermischt.

| Vulkanisat: | Shore A 41 | |
|---|---|---|
| Haftung auf Makrolon 2405 | 10,9 N/mm | mit Kohäsionsriss |
| Haftung auf V2A | 1,2 N/mm | mit Adhäsionsriss |

### Beispiel 3 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 2,7 g des Vernetzers 4 und 0,75 g Haftvermittler 2 vermischt.

| Vulkanisat: | Shore A 42 | |
|---|---|---|
| Haftung auf Makrolon 2405 | 12,9 N/mm | mit Kohäsionsriss |
| Haftung auf V2A | 0 N/mm | mit Adhäsionsriss |

### Beispiel 4 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 3,0 g des Vernetzers 3 und 1,0 g Haftvermittler 2 vermischt.

| Vulkanisat: | Shore A 51 | |
|---|---|---|
| Haftung auf Makrolon 2405 | 14,8 N/mm | mit Kohäsionsriss |
| Haftung auf V2A | 0,2 N/mm | mit Adhäsionsriss |

### Beispiel 5 (erfindungsgemäß)

Als A-Komponente wurde die A-Komponente 1 verwendet.

### B-Komponente:

95 g der Grundmasse 1 wurden mit 0,1 g 1-Ethinyl-1-cyclohexanol, 2,8 g des Vernetzers 3 und 1,3 g Haftvermittler 1 vermischt.

| Vulkanisat: | Shore A 40 | |
|---|---|---|
| Haftung auf Makrolon 2405 | 10,7 N/mm | mit Kohäsionsriss |
| Haftung auf V2A | 1,3 N/mm | mit Adhäsionsriss |

### Beispiel 6 (erfindungsgemäß)

Als A-Komponente wurde die A-Komponente 1 verwendet.

### B-Komponente:

96,5 g der Grundmasse 3 wurden mit 0,1 g 1-Ethinyl-1-cyclohexanol, 2,7 g des Vernetzers 4 und 0,8 g Haftvermittler 1 vermischt.

| Vulkanisat: | Shore A 40 | |
|---|---|---|
| Haftung auf Makrolon 2405 | 11,9 N/mm | mit Kohäsionsriss |
| Haftung auf V2A | 1,6 N/mm | mit Adhäsionsriss |

### Beispiel 7 (erfindungsgemäß)

Als A-Komponente wurde die A-Komponente 1 verwendet.

### B-Komponente:

96,5 g der Grundmasse 3 wurden mit 0,1 g 1-Ethinyl-1-cyclohexanol, 2,5 g des Vernetzers 1 und 1,0 g Haftvermittler 1 vermischt.

| Vulkanisat: | Shore A 40 | |
|---|---|---|
| Haftung auf Makrolon 2405 | 11,3 N/mm | mit Kohäsionsriss |
| Haftung auf V2A | 1,8 N/mm | mit Adhäsionsriss |

### Beispiel 8 (erfindungsgemäß)

Als A-Komponente wurde die A-Komponente 1 verwendet.

### B-Komponente:

61 g der Grundmasse 2 wurden mit 0,02 g 1-Ethinyl-1-cyclohexanol, 25 g eines Dimethylsiloxy-terminierten Polydimethylsiloxans mit einer Viskosität von 950 mPas, 2,4 g des Vernetzers 4 und 0,5 g Haftvermittler 1 vermischt.

Die A- und B-Komponente werden im Verhältnis 1 : 1 im Speedmixer miteinander vermischt, auf die Substrate aufgetragen und drucklos im Trockenschrank 1 Stunde bei 80 °C vulkanisiert. Das Vulkanisat hat eine Härte Shore A 28. Der Verbund zeigt beim Trennversuch Kohäsionsriss im Silicon.

### Beispiel 9 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 2,7 g des Vernetzers 4 und 1,0 g Haftvermittler 1 vermischt.

Das Muster wurde im 2K Spritzgussverfahren verarbeitet.

| Vulkanisat: | Shore A 41 | |
|---|---|---|
| Haftung auf Makrolon 2405 | 18,5 N/mm | mit Kohäsionsriss |
| Haftung auf Pocan 1305 (PBT) | 16,2 N/mm | mit Kohäsionsriss |
| Keine Formhaftung. | | |

### Beispiel 10 (erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 2,5 g des Vernetzers 1 und 1,0 g Haftvermittler 1 vermischt.

Das Muster wurde im 2K Spritzgussverfahren verarbeitet.

| Vulkanisat: | Shore A 46 | |
|---|---|---|
| Haftung auf Makrolon 2405 | 17,0 N/mm | mit Kohäsionsriss |
| Haftung auf Pocan 1305 (PBT) | 13,8 N/mm | mit Kohäsionsriss |
| Keine Formhaftung. | | |

### Beispiel N.1 (nicht erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 2,3 g des Vernetzers 2, 1,50 g einer Mischung aus HD5 / HD6 Cyclen und 2,0 g Diallyladipat (bezogen von ABCR) vermischt.

| Vulkanisat: | Shore A 21 | |
|---|---|---|
| Haftung auf Makrolon 2405 | 2,5 N/mm | mit Adhäsionsriss |
| Haftung auf V2A | 2,4 N/mm | mit Adhäsionsriss |

### Beispiel N.2 (nicht erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 3,0 g des Vernetzers 3 und 1,0 g Undecensäure verestert mit Monomethoxytriethylenglykol (bezogen unter der Bezeichnung u10MEE-03 von der Fa. Elevance) vermischt.

| Vulkanisat: | Shore A 40 | |
|---|---|---|
| Haftung auf Makrolon 2405 | 0 N/mm | mit Adhäsionsriss |
| Haftung auf V2A | 1,9 N/mm | mit Adhäsionsriss |

### Beispiel N.3 (nicht erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 7,1 g des Vernetzers 5 und 0,75 g Haftvermittler 2 vermischt.

| Vulkanisat: | Shore A 38 | |
|---|---|---|
| Haftung auf Makrolon 2405 | 3,2 N/mm | mit Adhäsionsriss |
| Haftung auf V2A | 0,8 N/mm | mit Adhäsionsriss |

### Beispiel N.4 (nicht erfindungsgemäß)

Als A-Komponente wurde die A-Komponente 1 verwendet.

### B-Komponente:

95 g der Grundmasse 2 wurden mit 0,1 g 1-Ethinyl-1-cyclohexanol, 0,7 g des Vernetzers 6 und 0,75 g Haftvermittler 2 vermischt.

| Vulkanisat: | Shore A 47 |
|---|---|
| Haftung auf Makrolon 2405 | 6,9 N/mm mit gemischtem Rissbild |
| Haftung auf V2A | 4,2 N/mm mit gemischtem Rissbild |

## Patentansprüche

1. Additionsvernetzende Siliconkautschukzusammensetzung, enthaltend
(A) mindestens ein Organopolysiloxan mit mindestens zwei aliphatischen Doppelbindungen im Molekül,
(B) mindestens ein Organopolysiloxan mit mindestens drei Si-H Gruppen im Molekül, **dadurch gekennzeichnet, dass sein Si-H-Gehalt mindestens 0,45 Gew.% und maximal 1,3 Gew.% beträgt,**
(C) mindestens einen Hydrosilylierungskatalysator,
(D) mindestens einen Haftvermittler der allgemeinen Formel (I)
[H₂C=CH-(A¹)_{z}-(A²)ₘ-X]ₙB (I)
in der
A¹ einen zweiwertigen C₁-C₁₈-Kohlenwasserstoffrest, der substituiert oder nicht substituiert ist mit Halogenatomen,
A² einen zweiwertigen C₁-C₂₄-Kohlenwasserstoffrest, der durch nicht benachbarte Sauerstoffatome oder Stickstoffatome oder Gruppen der Formeln -NR-, -CO- oder -CO-NR¹- unterbrochen ist oder nicht unterbrochen ist und zusätzlich noch substituiert oder nicht substituiert ist mit Halogenatomen, mit der Maßgabe, dass pro Sauerstoff- oder Stickstoffatom mindestens 5 Kohlenstoffatome vorhanden sind,
X eine zweiwertige Gruppe -O-, -CO- oder -COO-,
B polare Reste, die Kohlenstoffatome und mindestens 2 nicht benachbarte Sauerstoffatome aufweisen, wobei die Sauerstoffatome als Ethersauerstoff oder in Hydroxylgruppen, C₁-C₄-Acyl- oder C₁-C₃-Trialkylsilylgruppen
m vorliegen, mit der Maßgabe, dass pro Sauerstoffatom höchstens 3 Kohlenstoffatome vorhanden sind, die Werte 0 oder 1,
**n** **den Wert 2**,
z die Werte 0 oder 1,
R und R¹ jeweils einen einwertigen C₁-C₁₀-Kohlenwasserstoffrest, der substituiert oder nicht substituiert ist mit Halogenatomen,
bedeuten,
mit der Maßgabe, dass die Reste [H₂C=CH-(A¹)_{z}-(A²)ₘ-X] gleich oder voneinander verschieden sind,
(E) **KEIN cyclisches** Organohydrogenpolysiloxan der allgemeinen Formel (III),
(SiHR⁷O)_{g}(SiR⁸R⁹O)ₖ (III),
in der
R⁷ Wasserstoff oder das gleiche wie R⁸, und
R⁸ und R⁹ unabhängig voneinander
(a) einen monovalenten aliphatisch gesättigten Kohlenwasserstoffrest mit 1 bis 20 Kohlenstoffatomen, oder
(b) einen halogensubstituierten oder nicht substituierten monovalenten Kohlenwasserstoffrest mit 6 bis 20 Kohlenstoffatomen, welcher mindestens einen aromatischen C₆-Ring enthält, oder
(c) einen monovalenten cycloaliphatischen halogensubstituierten oder nicht substituierten Kohlenwasserstoffrest mit 3 bis 20 Kohlenstoffatomen, oder
(d) einen halogensubstituierten, O- oder N-Atome enthaltenden oder nicht enthaltenden, gesättigten, monovalenten Kohlenwasserstoffrest mit 2 bis 20 Kohlenstoffatomen, oder
(e) einen Si-Atome enthaltenden linearen, cyclischen oder verzweigten Rest mit oder ohne einem oder mehreren Si-gebundenen Wasserstoffatomen bedeuten,
g eine Zahl größer oder gleich 1, und
k Null oder eine positive Zahl, bevorzugt 0, 1, 2 und besonders bevorzugt 0, bedeuten,
mit der Maßgabe, dass die Summe aus g und k eine Zahl größer oder gleich 4 ist.

2. Additionsvernetzende Siliconkautschukzusammensetzung gemäß Anspruch 1, **dadurch gekennzeichnet, dass** in der allgemeinen Formel (I) m den Wert 0 bedeutet.

3. Additionsvernetzende Siliconkautschukzusammensetzung gemäß Anspruch 1 oder 2, **dadurch gekennzeichnet, dass** die Viskosität der Organopolysiloxane (B) bei 20°C 5 bis 50.000 mPa.s, insbesondere 10 bis 5.000 mPa.s, besonders bevorzugt 15 - 100 mPa.s beträgt.

4. Additionsvernetzende Siliconkautschukzusammensetzung gemäß einem der Ansprüche 1 bis 3, **dadurch gekennzeichnet, dass** (D) ein Di-Ester aus Oligoethylenglycol mit endständig ungesättigten C₆ bis C₁₆ Carbonsäuren ist.

5. Additionsvernetzende Siliconkautschukzusammensetzung gemäß Anspruch 4, **dadurch gekennzeichnet, dass** es sich bei der Carbonsäure, um 10-Undencensäure handelt.

6. Additionsvernetzende Siliconkautschukzusammensetzung gemäß Anspruch 4 oder 5, **dadurch gekennzeichnet, dass** das Oligoethylenglycol von 2 bis 40 Ethylenglycoleinheiten -[CH₂-CH₂-O]-, bevorzugt 3 bis 20 Ethylenglycoleinheiten -[CH₂-CH₂-O]-, insbesondere bevorzugt 4 - 10 Ethylenglycoleinheiten -[CH₂-CH₂-O]-aufweist.

7. Verfahren zur Beschichtung von Substratoberflächen sowie zur Herstellung von Verbundformteilen, wobei man
a) die Substratoberflächen mit einer Siliconkautschukzusammensetzung beschichtet
oder/und die Substrate und/oder Substratkombinationen zusammenfügt und die Siliconkautschukzusammensetzung in die Zwischenräume einbringt,
b) danach die Siliconkautschukzusammensetzung aushärtet,
c) danach ein Entformungsvorgang folgt,
**dadurch gekennzeichnet, dass die Silikonkautschukzusammensetzung**
Additionsvernetzende Siliconkautschukzusammensetzung, enthaltend
(A) mindestens ein Organopolysiloxan mit mindestens zwei aliphatischen Doppelbindungen im Molekül,
(B) mindestens ein Organopolysiloxan mit mindestens drei Si-H Gruppen im Molekül, **dadurch gekennzeichnet, dass sein Si-H-Gehalt mindestens 0,45 Gew.% und maximal 1,3 Gew.% beträgt,**
(C) mindestens einen Hydrosilylierungskatalysator,
(D) mindestens einen Haftvermittler der allgemeinen Formel (I)
[H₂C=CH-(A¹)_{z}-(A²)ₘ-X]ₙB (I)
in der
A¹ einen zweiwertigen C₁-C₁₈-Kohlenwasserstoffrest, der substituiert oder nicht substituiert ist mit Halogenatomen,
A² einen zweiwertigen C₁-C₂₄-Kohlenwasserstoffrest, der durch nicht benachbarte Sauerstoffatome oder Stickstoffatome oder Gruppen der Formeln -NR-, -CO- oder -CO-NR¹- unterbrochen ist oder nicht unterbrochen ist und zusätzlich noch substituiert oder nicht substituiert ist mit Halogenatomen, mit der Maßgabe, dass pro Sauerstoff- oder Stickstoffatom mindestens 5 Kohlenstoffatome vorhanden sind,
X eine zweiwertige Gruppe -O-, -CO- oder -COO-,
B polare Reste, die Kohlenstoffatome und mindestens 2 nicht benachbarte Sauerstoffatome aufweisen, wobei die Sauerstoffatome als Ethersauerstoff oder in Hydroxylgruppen, Cₗ-C₄-Acyl- oder C₁-C₃-Trialkylsilylgruppen vorliegen, mit der Maßgabe, dass pro Sauerstoffatom höchstens 3 Kohlenstoffatome vorhanden sind,
m die Werte 0 oder 1 **(bevorzugt den Wert 0)**
**n** **den Wert 2**,
**z** **die Werte 0 oder 1**,
R und R¹ jeweils einen einwertigen C₁-C₁₀-Kohlenwasserstoffrest, der substituiert oder nicht substituiert ist mit Halogenatomen,
bedeuten,
mit der Maßgabe, dass die Reste [H₂C=CH-(A¹)_{z}-(A²)ₘ-X] gleich oder voneinander verschieden sind,
(E) **KEIN cyclisches** Organohydrogenpolysiloxan der allgemeinen Formel (III),
(SiHR⁷O)_{g}(SiR⁸R⁹O)ₖ (III),
in der
R⁷ Wasserstoff oder das gleiche wie R⁸, und
R⁸ und R⁹ unabhängig voneinander
(a) einen monovalenten aliphatisch gesättigten Kohlenwasserstoffrest mit 1 bis 20 Kohlenstoffatomen, oder
(b) einen halogensubstituierten oder nicht substituierten monovalenten Kohlenwasserstoffrest mit 6 bis 20 Kohlenstoffatomen, welcher mindestens einen aromatischen C₆-Ring enthält, oder
(c) einen monovalenten cycloaliphatischen halogensubstituierten oder nicht substituierten Kohlenwasserstoffrest mit 3 bis 20 Kohlenstoffatomen, oder
(d) einen halogensubstituierten, O- oder N-Atome enthaltenden oder nicht enthaltenden, gesättigten, monovalenten Kohlenwasserstoffrest mit 2 bis 20 Kohlenstoffatomen, oder
(e) einen Si-Atome enthaltenden linearen, cyclischen oder verzweigten Rest mit oder ohne einem oder mehreren Si-gebundenen Wasserstoffatomen bedeuten,
g eine Zahl größer oder gleich 1, und
k Null oder eine positive Zahl, bevorzugt 0, 1, 2 und besonders bevorzugt 0, bedeuten,
mit der Maßgabe, dass die Summe aus g und k eine Zahl größer oder gleich 4 ist.

8. Verfahren zur Beschichtung von Substratoberflächen sowie zur Herstellung von Verbundformteilen gemäß Anspruch 7, **dadurch gekennzeichnet, dass** als Substrat Thermoplaste, bevorzugt Polyamid, Polycarbonat und Polybutylenterephthalat, besonders bevorzugt Polycarbonat verwendet wird.

9. Beschichte Substrate und Verbund-Formteile erhältlich durch das Verfahren nach Anspruch 7 oder 8.

## Claims

1. An addition-crosslinking silicone rubber composition containing
(A) at least one organopolysiloxane having at least two aliphatic double bonds in the molecule,
(B) at least one organopolysiloxane having at least three Si-H groups in the molecule, **characterized in that the Si-H content thereof is at least 0.45% by weight and not more than 1.3% by weight,**
(C) at least one hydrosilylation catalyst,
(D) at least one bonding agent of the general formula (I)
[H₂C=CH-(A¹)_{z}-(A²)ₘ-X]ₙB (I)
where
A¹ is a divalent C₁-C₁₈-hydrocarbon radical which is unsubstituted or substituted by halogen atoms,
A² is a divalent C₁-C₂₄-hydrocarbon radical which is interrupted by nonadjacent oxygen atoms or nitrogen atoms or groups of the formulae -NR-, -CO- or -CO-NR¹- or uninterrupted and is additionally unsubstituted or substituted by halogen atoms, with the proviso that at least 5 carbon atoms are present per oxygen or nitrogen atom,
X is a divalent group -O-, -CO- or -COO-,
B is polar radicals comprising carbon atoms and at least 2 nonadjacent oxygen atoms, where the oxygen atoms are present as ether oxygen or in hydroxyl groups, C₁-C₄-acyl groups or C₁-C₃-trialkylsilyl groups, with the proviso that not more than 3 carbon atoms are present per oxygen atom,
m is 0 or 1,
**n** **is 2**,
z is 0 or 1,
R and R¹ are each a monovalent C₁-C₁₀-hydrocarbon radical which is unsubstituted or substituted by halogen atoms,
with the proviso that the radicals [H₂C=CH-(A¹)_{z}-(A²)ₘ-X] are identical or different,
(E) **NO cyclic** organohydrogenpolysiloxane of the general formula (III),
(SiHR⁷O)_{g}(SiR⁸R⁹O)ₖ (III),
where
R⁷ is hydrogen or is the same as R⁸, and
R⁸ and R⁹ are each, independently of one another,
(a) a monovalent aliphatically saturated hydrocarbon radical having from 1 to 20 carbon atoms, or
(b) a halogen-substituted or unsubstituted monovalent hydrocarbon radical which has from 6 to 20 carbon atoms and contains at least one aromatic C₆ ring, or
(c) a monovalent cycloaliphatic halogen-substituted or unsubstituted hydrocarbon radical having from 3 to 20 carbon atoms, or
(d) a halogen-substituted, saturated, monovalent hydrocarbon radical which has from 2 to 20 carbon atoms and may or may not contain O or N atoms, or
(e) a linear, cyclic or branched radical which contains Si atoms and is with or without one or more Si-bonded hydrogen atoms,
g is greater than or equal to 1, and
k is zero or a positive integer, preferably 0, 1, 2 and particularly preferably 0,
with the proviso that the sum of g and k is greater than or equal to 4.

2. The addition-crosslinking silicone rubber composition as claimed in claim 1, **characterized in that** m in the general formula (I) is 0.

3. The addition-crosslinking silicone rubber composition as claimed in claim 1 or 2, **characterized in that** the viscosity of the organopolysiloxanes (B) at 20°C is from 5 to 50 000 mPa.s, in particular from 10 to 5000 mPa.s, particularly preferably 15-100 mPa.s.

4. The addition-crosslinking silicone rubber composition as claimed in any of claims 1 to 3, **characterized in that** (D) is a diester of oligoethylene glycol with terminally unsaturated C₆-C₁₆-carboxylic acids.

5. The addition-crosslinking silicone rubber composition as claimed in claim 4, **characterized in that** the carboxylic acid is 10-undecenoic acid.

6. The addition-crosslinking silicone rubber composition as claimed in claim 4 or 5, **characterized in that** the oligoethylene glycol has from 2 to 40 ethylene glycol units -[CH₂-CH₂-O]-, preferably from 3 to 20 ethylene glycol units -[CH₂-CH₂-O]-, in particular 4-10 ethylene glycol units -[CH₂-CH₂-O]-.

7. A method for coating substrate surfaces and for producing composite moldings, where
a) the substrate surfaces are coated with a silicone rubber composition
or/and the substrates and/or substrate combinations are assembled and the silicone rubber composition is introduced into the intermediate spaces,
b) the silicone rubber composition then cures,
c) a demolding operation then follows,
**characterized in that the silicone rubber composition**
is an addition-crosslinking silicone rubber composition containing
(A) at least one organopolysiloxane having at least two aliphatic double bonds in the molecule,
(B) at least one organopolysiloxane having at least three Si-H groups in the molecule, **characterized in that the Si-H content thereof is at least 0.45% by weight and not more than 1.3% by weight,**
(C) at least one hydrosilylation catalyst,
(D) at least one bonding agent of the general formula (I)
[H₂C=CH-(A¹)_{z}-(A²)ₘ-X]ₙB (I)
where
A¹ is a divalent C₁-C₁₈-hydrocarbon radical which is unsubstituted or substituted by halogen atoms,
A² is a divalent C₁-C₂₄-hydrocarbon radical which is interrupted by nonadjacent oxygen atoms or nitrogen atoms or groups of the formulae -NR-, -CO- or -CO-NR¹- or uninterrupted and is additionally unsubstituted or substituted by halogen atoms, with the proviso that at least 5 carbon atoms are present per oxygen or nitrogen atom,
X is a divalent group -O-, -CO- or -COO-,
B is polar radicals comprising carbon atoms and at least 2 nonadjacent oxygen atoms, where the oxygen atoms are present as ether oxygen or in hydroxyl groups, C₁-C₄-acyl groups or C₁-C₃-trialkylsilyl groups, with the proviso that not more than 3 carbon atoms are present per oxygen atom,
m is 0 or 1 **(preferably 0)**
**n** **is 2**,
**z** **is 0 or 1**,
R and R¹ are each a monovalent C₁-C₁₀-hydrocarbon radical which is unsubstituted or substituted by halogen atoms,
with the proviso that the radicals [H₂C=CH-(A¹)₂-(A²)ₘ-X] are identical or different,
(E) **NO cyclic** organohydrogenpolysiloxane of the general formula (III),
(SiHR⁷O)_{g}(SiR⁸R⁹O)ₖ (III),
where
R⁷ is hydrogen or is the same as R⁸, and
R⁸ and R⁹ are each, independently of one another,
(a) a monovalent aliphatically saturated hydrocarbon radical having from 1 to 20 carbon atoms, or
(b) a halogen-substituted or unsubstituted monovalent hydrocarbon radical which has from 6 to 20 carbon atoms and contains at least one aromatic C₆ ring, or
(c) a monovalent cycloaliphatic halogen-substituted or unsubstituted hydrocarbon radical having from 3 to 20 carbon atoms, or
(d) a halogen-substituted, saturated, monovalent hydrocarbon radical which has from 2 to 20 carbon atoms and may or may not contain O or N atoms, or
(e) a linear, cyclic or branched radical which contains Si atoms and is with or without one or more Si-bonded hydrogen atoms,
g is greater than or equal to 1, and
k is zero or a positive integer, preferably 0, 1, 2 and particularly preferably 0,
with the proviso that the sum of g and k is greater than or equal to 4.

8. The method for coating substrate surfaces and for producing composite moldings as claimed in claim 7, **characterized in that** thermoplastics, preferably polyamide, polycarbonate and polybutylene terephthalate, particularly preferably polycarbonate, are used as substrate.

9. A coated substrate or composite molding obtainable by the method as claimed in claim 7 or 8.

## Revendications

1. Composition de caoutchouc de silicone réticulante par addition, contenant
(A) au moins un organopolysiloxane comportant au moins deux doubles liaisons aliphatiques dans la molécule,
(B) au moins un organopolysiloxane comportant au moins trois groupes Si-H par molécule, **caractérisée en ce que** sa teneur en Si-H est d'au moins 0,45 % en poids et d'au maximum 1,3 % en poids,
(C) au moins un catalyseur d'hydrosilylation,
(D) au moins un promoteur d'adhérence de formule générale (I)
[H₂C=CH-(A¹)_{z}-(A²)ₘ-X]ₙB (I)
dans laquelle
A¹ signifie un radical hydrocarboné divalent en C₁-C₁₈, qui est substitué ou non substitué par des atomes d'halogène,
A² signifie un radical hydrocarboné divalent en C₁-C₂₄, qui est interrompu par des atomes d'oxygène ou des atomes d'azote ou des groupes des formules -NR-, -CO- ou -CO-NR¹- non adjacents ou qui n'est pas interrompu et qui est de plus encore substitué ou non substitué par des atomes d'halogène, à la condition qu'au moins 5 atomes de carbone soient présents par atome d'oxygène ou atome d'azote, X signifie un groupe divalent -O-, -CO- ou -COO-, B signifie des radicaux polaires, qui présentent des atomes de carbone et au moins 2 atomes d'oxygène non adjacents, les atomes d'oxygène étant présents en tant qu'oxygène d'éther ou dans des groupes hydroxyle, des groupes acyle en C₁-C₄ ou des groupes trialkyle silyle en C₁-C₃, à la condition qu'au plus 3 atomes de carbone soient présents par atome d'oxygène,
m signifie la valeur 0 ou 1,
n signifie la valeur 2,
z signifie la valeur 0 ou 1,
R et R¹ signifient à chaque fois un radical hydrocarboné monovalent en C₁-C₁₀ qui est substitué ou non substitué par des atomes d'halogène,
à la condition que les radicaux
[H₂C=CH-(A¹)_{z}-(A²)ₘ-X] soient identiques ou différents les uns des autres,
(E) ne contenant pas d'organohydrogénosiloxane cyclique de formule générale (III),
(SiHR⁷O)_{g}(SiR⁸R⁹O)ₖ (III),
dans laquelle
R⁷ signifie hydrogène ou la même chose que R⁸, et
R⁸ et R⁹ signifient indépendamment l'un de l'autre
(a) un radical hydrocarboné monovalent aliphatiquement saturé comportant 1 à 20 atomes de carbone,
ou
(b) un radical hydrocarboné monovalent substitué par halogène ou non substitué comportant 6 à 20 atomes de carbone, qui contient au moins un cycle aromatique en C₆,
ou
(c) un radical hydrocarboné monovalent cycloaliphatique substitué par halogène ou non substitué comportant 3 à 20 atomes de carbone,
ou
(d) un radical hydrocarboné monovalent, saturé, substitué par halogène, contenant ou ne contenant pas d'atomes de O ou de N, comportant 2 à 20 atomes de carbone,
ou
(e) un radical linéaire, cyclique ou ramifié contenant des atomes de Si avec ou sans un ou plusieurs atomes d'hydrogène liés à Si,
g signifie un nombre supérieur ou égal à 1, et
k signifie zéro ou un nombre positif, préférablement 0, 1, 2 et particulièrement préférablement 0,
à la condition que la somme de g et k soit un nombre supérieur ou égal à 4.

2. Composition de caoutchouc de silicone réticulante par addition selon la revendication 1, **caractérisée en ce que**, dans la formule générale (I), m signifie la valeur 0.

3. Composition de caoutchouc de silicone réticulante par addition selon la revendication 1 ou 2, **caractérisée en ce que** la viscosité des organopolysiloxanes (B) à 20 °C est de 5 à 50 000 mPa.s, en particulier de 10 à 5 000 mPa.s, particulièrement préférablement de 15 à 100 mPa.s.

4. Composition de caoutchouc de silicone réticulante par addition selon l'une quelconque des revendications 1 à 3, **caractérisée en ce que** (D) est un diester d'oligoéthylèneglycol comportant des acides carboxyliques insaturés terminaux en C₆-C₁₆.

5. Composition de caoutchouc de silicone réticulante par addition selon la revendication 4, **caractérisée en ce que** l'acide carboxylique est l'acide 10-undécénique.

6. Composition de caoutchouc de silicone réticulante par addition selon la revendication 4 ou 5, **caractérisée en ce que** l'oligoéthylèneglycol présente de 2 à 40 motifs d'éthylène glycol -[CH₂-CH₂-O]-, préférablement 3 à 20 motifs d'éthylène glycol -[CH₂-CH₂-O]-, en particulier préférablement 4 à 10 motifs d'éthylène glycol -[CH₂-CH₂-O]-.

7. Procédé de revêtement de surfaces de substrats ainsi que de préparation de pièces moulées composites, dans lequel
a) on revêt les surfaces de substrats par une composition de caoutchouc de silicone ou/et on assemble les substrats et/ou les combinaisons de substrats et on introduit la composition de caoutchouc de silicone dans les interstices
b) on durcit ensuite la composition de caoutchouc de silicone,
c) s'ensuit ensuite une opération de démoulage, **caractérisé en ce que** la composition de caoutchouc de silicone composition de caoutchouc de silicone réticulante par addition, contenant
(A) au moins un organopolysiloxane comportant au moins deux doubles liaisons aliphatiques dans la molécule,
(B) au moins un organopolysiloxane comportant au moins trois groupes Si-H dans la molécule, **caractérisé en ce que** sa teneur en Si-H est d'au moins 0,45 % en poids et d'au maximum 1,3 % en poids,
(C) au moins un catalyseur d'hydrosilylation,
(D) au moins un promoteur d'adhérence de formule générale (I)
[H₂C=CH-(A¹)_{z}-(A²)ₘ-X]ₙB (I)
dans laquelle
A¹ signifie un radical hydrocarboné divalent en C₁-C₁₈, qui est substitué ou non substitué par des atomes d'halogène,
A² signifie un radical hydrocarboné divalent en C₁-C₂₄, qui est interrompu par des atomes d'oxygène ou des atomes d'azote ou des groupes des formules -NR-, -CO- ou -CO-NR¹- non adjacents ou qui n'est pas interrompu et qui est de plus encore substitué ou non substitué par des atomes d'halogène, à la condition qu'au moins 5 atomes de carbone soient présents par atome d'oxygène ou atome d'azote, X signifie un groupe divalent -O-, -CO- ou -COO-, B signifie des radicaux polaires, qui présentent des atomes de carbone et au moins 2 atomes d'oxygène non adjacents, les atomes d'oxygène étant présents en tant qu'oxygène d'éther ou dans des groupes hydroxyle, des groupes acyle en C₁-C₄ ou des groupes trialkyle silyle en C₁-C₃, à la condition qu'au plus 3 atomes de carbone soient présents par atome d'oxygène,
m signifie la valeur 0 ou 1 (préférablement la valeur 0),
n signifie la valeur 2,
z signifie la valeur 0 ou 1,
R et R¹ signifient à chaque fois un radical hydrocarboné monovalent en C₁-C₁₀ qui est substitué ou non substitué par des atomes d'halogène, à la condition que les radicaux
[H₂C=CH-(A¹)_{z}-(A²)ₘ-X] soient identiques ou différents les uns des autres,
(E) ne contenant pas d'organohydrogénosiloxane cyclique de formule générale (III),
(SiHR⁷O)_{g}(SiR⁸R⁹O)ₖ (III),
dans laquelle
R⁷ signifie hydrogène ou la même chose que R⁸, et
R⁸ et R⁹ signifient indépendamment l'un de l'autre
(a) un radical hydrocarboné monovalent aliphatiquement saturé comportant 1 à 20 atomes de carbone,
ou
(b) un radical hydrocarboné monovalent substitué par halogène ou non substitué comportant 6 à 20 atomes de carbone, qui contient au moins un cycle aromatique en C₆,
ou
(c) un radical hydrocarboné monovalent cycloaliphatique substitué par halogène ou non substitué comportant 3 à 20 atomes de carbone,
ou
(d) un radical hydrocarboné monovalent, saturé, substitué par halogène, contenant ou ne contenant pas d'atomes de O ou de N, comportant 2 à 20 atomes de carbone,
ou
(e) un radical linéaire, cyclique ou ramifié contenant des atomes de Si avec ou sans un ou plusieurs atomes d'hydrogène liés à Si,
g signifie un nombre supérieur ou égal à 1, et
k signifie zéro ou un nombre positif, préférablement 0, 1, 2 et particulièrement préférablement 0,
à la condition que la somme de g et k soit un nombre supérieur ou égal à 4.

8. Procédé de revêtement de surfaces de substrats ainsi que de préparation de pièces moulées composites selon la revendication 7, **caractérisé en ce qu'**en tant que substrat, des thermoplastiques, préférablement un polyamide, un polycarbonate et un poly(téréphtalate de butylène), particulièrement préférablement un polycarbonate, est utilisé.

9. Substrats et pièces moulées composites revêtu(e)s pouvant être obtenu(e)s par le procédé selon la revendication 7 ou 8.
